# EUROPEAN PATENT APPLICATION

(11) **EP 2 617 499 A1**
(43) Date of publication of application: **24.07.2013**
(21) Application number: 13151970.4
(22) Date of filing: 18.01.2013
(51) Int. Cl.: B08B 15/00, B01D 46/44, F24F 11/00

(54) **Mobile equipment for suctioning and filtering particulate material and a method for controlling the same**

(30) Priority: 20.01.2012 IT MI20120060
(71) Applicant: Longo Euroservice S.R.L., 70014 Conversano (BA) (IT)
(72) Inventor: Lacitignola, Nicola, 70014 CONVERSANO (BA) (IT)
(74) Representative: Lotti, Giorgio

(57) **Abstract**

Mobile equipment for suctioning and filtering particulate material from a flow comprising air and non-volatile particulate material, wherein the equipment comprises at least one first filter stage (12), having at least one first outlet (12b) for conveying the treated flow downstream towards at least one suction pump (14), and at least one second filter stage (13) arranged in cascade at the least one first filter stage (12), the first outlet (12b) of the first filter stage (12) being connected to the inlet (13a) of the second filter stage (13), wherein downstream of the at least one suction pump (14) there is provided a first group (15) for monitoring the residual particulate material exiting from the at least one suction pump (14), the first monitoring group (15) being connected to processing means (16) for controlling - opening and closing - a pair of valves (17,18) for selectively directing a flow exiting from the at least one suction pump (14) towards an additional filter stage (19) arranged downstream of the first monitoring group (15), or directly towards an outlet for release into the open air.

## Description

The present invention refers to a mobile equipment for suctioning and filtering particulate material or powders as well as a method for controlling of such equipment.

The expression mobile equipment for suctioning and filtering powders is used to indicate equipment integrated in industrial vehicles or platforms which can be moved by means of roll-off vehicles specifically suitable for removing non-volatile particulate material usually by mechanically suctioning and filtering the same.

The mobile equipment for the treatment of powders or particulate material may be obtained in an independent configuration or in a combined configuration and integrated with equipment for the treatment of liquid material such as sludge.

In various industrial sectors such as for example the metal works, mining, cement production, paper production, tanning industry and even other industries, it is often necessary to proceed with decontamination works of stations, apparatuses or transport means used in the machining processes, following the deposit of residuals of powder or non-volatile particulate material which would make the reutilization thereof impossible.

Such decontamination operations occur through mobile suctioning and filtering equipment which, once transferred at the area to be treated, perform the suctioning of the residual material and recovering the same through suitable filtering.

As an example of an application in which the mobile equipment for suctioning and filtering is used there should be considered the recovery of metal works scraps or cleaning of carbon dust from conveyor belts or wagons for transporting the same.

In particular, the known mobile equipment for suctioning and filtering powders or particulate material generally comprise two filter stages, usually of the mechanical-action type, arranged in cascade and followed by a suction pump.

A first filter stage performs a coarse filtering of the larger sizes, preferably through filters of large proportions with an array of pockets having a considerable filtering surface.

The second filter stage, arranged downstream of the first, in turn performs a finer filtering adapted to remove the remaining particles not eliminated through the first stage, trying to bring the values of the powder emissions below the maximum values allowed by the law.

The particulate material recovered through the first filter stage is subsequently conveyed towards a containment housing such as for example a tank.

However, the known mobile equipment for suctioning and filtering powders or particulate material reveal drawbacks.

Actually, notwithstanding the use of two filter stages in cascade, it is not always guaranteed that the values of the residual powders are brought within the limits provided for by the law.

On the other hand, the use of one or more additional filter stages would lead to an excessive reduction of the suctioning performance.

Furthermore, even the particular currently used two-stage structure is not capable of preventing neither the creation of a highly hazardous explosive environment inside the equipment nor possible damaging of the suction pump due to possible excessive residuals of particles in the suctioned air.

Last but not least, on the currently known mobile equipment for suctioning and filtering powders or particulate material, the identification of a possible malfunction of the first filter stage, possibly caused by the breakage of one or more filter socks, depends on the experience of the operator who controls the equipment, who is generally capable of identifying a failure only with some delay with respect to the occurrence of the event.

An object of the present invention is that of overcoming the aforementioned drawback and in particular that of providing a mobile equipment for suctioning and filtering particulate material that is capable of guaranteeing, in outlet, values of residual powders still within the limits provided for by the law, even in view of an optimisation of the suctioning performance of the equipment.

Another object of the present invention is to provide a mobile equipment for suctioning and filtering particulate material that is capable of preventing the creation of an explosive environment within the filter stages.

Another object of the present invention is that of providing a mobile equipment for suctioning and filtering particulate material that is capable of preventing a damaging of the suctioning pump due to an excess of particles in the suctioned air.

Another object of the present invention is that of providing a mobile equipment for suctioning and filtering particulate material that is capable of instantly detecting a malfunctioning of the first filter stage.

Not least object of the present invention is that of designing a method for controlling a mobile equipment for suctioning and filtering particulate material that operates an optimization of the performances of suctioning, even guaranteeing the minimum values of outlet powder residuals.

These and other objects according to the present invention are attained by providing a mobile equipment for suctioning and filtering particulate material as outlined in claim 1.

Further characteristics of the mobile equipment for suctioning and filtering particulate material are an object of the dependents claims 2 to 11.

These and other objects according to the present invention are also attained by providing a method for controlling a mobile equipment for suctioning and filtering particulate material according to claim 13. The characteristics and advantages of a mobile equipment for suctioning and filtering particulate material according to the present invention shall be more apparent from the following exemplifying and nonlimiting description with reference to the attached schematic drawings wherein:

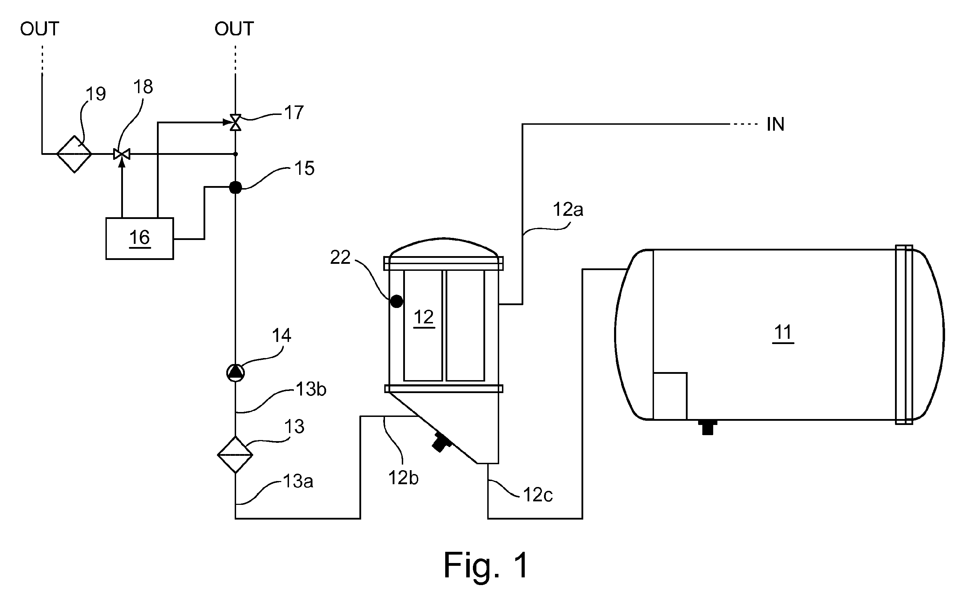

- figure 1 is a schematic representation of a first embodiment of a mobile equipment for suctioning and filtering particulate material according to the present invention;
- figure 2 is a schematic representation of a second embodiment of a mobile equipment for suctioning and filtering particulate material according to the present invention;

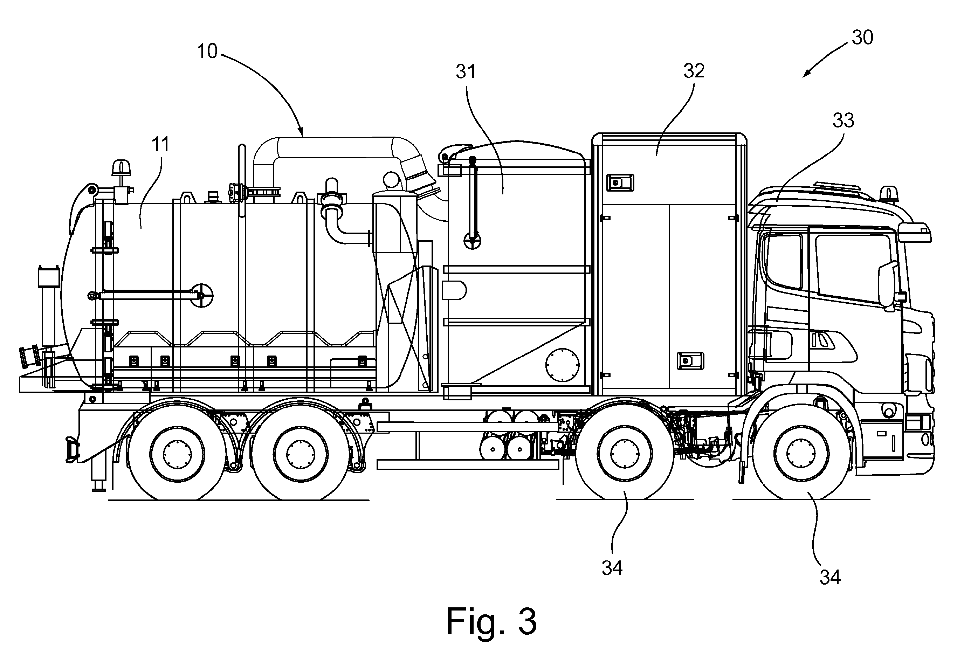

- figure 3 is a side elevational view of a vehicle comprising a mobile equipment for suctioning and filtering particulate material according to the present invention.

With reference to the figures, a mobile equipment for suctioning and filtering particulate material is shown, indicated in its entirety with 10.

The mobile equipment 10 for suctioning and filtering particulate material comprises at least one first filter stage 12 having an inlet 12a for the introduction of a flow to be treated comprising air and non-volatile particulate material, a first outlet 12b for conveying of the treated flow, connected to at least one suction pump 14, and a second outlet 12c for recovering the particulate material, preferably connected to a containment tank 11.

The mobile equipment 10 for suctioning and filtering particulate material further comprises at least one second filter stage 13 connected in cascade to the first 12, having an inlet 13a for the introduction of the flow to be treated and at least one first outlet 13b for conveying the treated flow downstream.

The expression "connection in cascade" between the two stages of filters 12,13 is used to indicate that the first outlet 12b of the first filter stage 12 is connected to the inlet 13a of the second filter stage 13.

The at least one first filter stage 12 is comprised in a first housing 31 which preferably has a cylindrical shape 31 for guaranteeing a greater resistance to the vacuum pressures, and comprises a lower funnel-shaped portion for facilitating recovering of the particulate material and the conveying thereof towards the second outlet 12c connected to the tank 11.

The at least one second filter stage 13 is comprised in a second housing 32 preferably closed and/or soundproofed 32. In alternative embodiments, the second housing 32 is open.

According to the present invention, downstream of the at least one suction pump 14 there is provided a group 15 for monitoring the particulate material exiting from the pump 14.

The monitoring group 15 detects at least the concentration of residual particulate material at the outlet of the suction pump 14. For such purpose, the monitoring group 15 comprises at least one triboelectric probe.

The term triboelectric probe is used to indicate a probe which, exploiting the principle of transferring electrical charges transported by a particulate material embedded in a gaseous fluid, generates an electrical signal proportional to the concentration of such material present in the fluid.

The monitoring group 15 is connected to processing means 16 which control the opening and the closure of a pair of valves 17,18 for the selective direction of the flow comprising air and non-volatile particulate material exiting from the suction pump 14 towards an additional filter stage 19 arranged downstream of the monitoring group 15, or directly towards an outlet into the open air.

The first, the second and the additional filter stage 11,12,19 are preferably of the mechanical type i.e. operating a mechanical filtering action on the flow to be treated such as for example a pocket filter, a sleeve filter, a rigid pleated panel filter, a candle filter and so on.

According to a preferred embodiment, the monitoring group 15, the valves 17,18 and the additional filter stage 19 are also comprised in the second housing 32. Preferably, the monitoring group 15 additionally comprises a thermal probe adapted to detect the temperature of the flow exiting from the suction pump 14.

Even more preferably, the monitoring group 15 additionally detects the electrostatic charge at the outlet of the suction pump 14 as it comprises for such purpose a proper probe (not illustrated) for the detection of the electrostatic charge.

The temperature value, the value of electrostatic charge and the concentration of particulate material detected at the outlet of the suction pump 14 indicate the presence or not of an explosive environment downstream of the pump 14.

Within the first housing 31 there is also preferably provided a second thermal probe 22 for monitoring the temperature within the first filter stage 12 with the aim of determining the presence or not of an explosive environment therewithin 12.

Analogously, in such first housing 31 there is also preferably provided a second probe for the detection of the electrostatic charge (not illustrated).

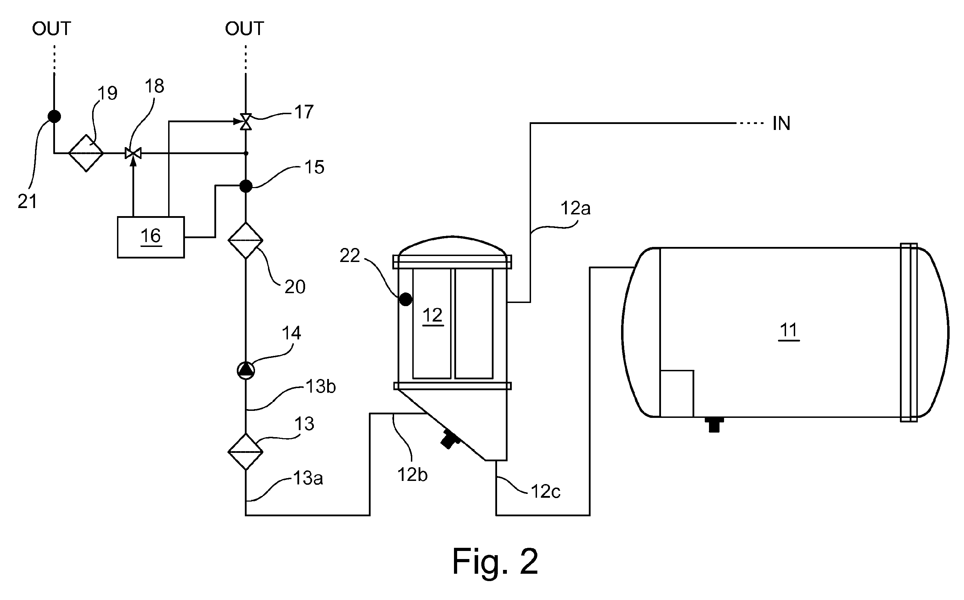

According to the embodiment illustrated in figure 2, the mobile equipment 10 for suctioning and filtering particulate material additionally comprises a silencer filter 20 provided with a plurality of meshes adapted to damp down the noise generated by the suction pump 14.

Preferably, the silencer filter 20 is arranged downstream of the suction pump 14 and upstream of the monitoring group 15.

The silencer filter 20 is preferably positioned within the second housing 32.

The embodiment of figure 2 comprises a second monitoring group 21 arranged downstream of the additional filter stage 19 for determining the residual concentration of particulate material after the action of the additional filtering stage 19.

For such purpose, also the second monitoring group 21 comprises a triboelectric probe and is preferably arranged within the second housing 32.

Preferably, also the second monitoring group 21 comprises a proper probe (not illustrated) for the detection of the electrostatic charge.

Though the embodiment of figure 2 provides for the simultaneous presence of the second monitoring group 21 and of the silencer filter 20, both such elements are entirely optional, given that they can be provided additionally or alternatively with respect to each other.

The mobile equipment 10 for suctioning and filtering particulate material is preferably obtained in a combined configuration and integrated with an equipment for the treatment of liquid materials (not illustrated).

The mobile equipment 10 for suctioning and filtering particulate material is preferably integrated in an industrial vehicle 30.

For such purpose, the industrial vehicle 30 comprises a tractor 33 connected to a chassis provided with a plurality of motorised wheels 34 and to which there can be associated a mobile equipment 10 according to the present invention.

Alternatively, the mobile equipment 10 for suctioning and filtering particulate material is integrated on a platform (not illustrated) which can be moved by means of a roll-off vehicle.

The mobile equipment 10 for suctioning and filtering particulate material according to the present invention operates as follows.

The monitoring group 15 cyclically controls the outlet of the suction pump 14 detecting the concentration of particulate material emitted and, preferably, also the temperature.

The instantaneous concentrations of particulate material detected are transmitted to the processing means 16 which evaluate the suitability of the flow emitted.

Should the concentration of residual particulate material detected at the outlet of the suction pump 14 be higher than a first preset threshold value, the processing means 16 control the closure of a first valve 17 of the pair of valves 17,18 arranged along the releasing branch into the open air and the opening of a second valve 18 of such pair of valves 17,18 arranged along the branch directed towards the additional filter stage 19.

Thus, the flow, before being released into the air, is subjected to a further filtering further reducing the concentration of the residual particulate material at the outlet of the equipment 10.

Otherwise, should the concentration of residual particulate material detected at the outlet of the suction pump 14 be smaller than the first limit value preset, the processing means 16 control the opening of the first valve 17 arranged along the branch for release into the open air and the closure of the second valve 18 arranged along the branch directed towards the additional filter stage 19.

The values of the concentration of particulate material at the outlet of the equipment 10 are thus maintained at low level, simultaneously guaranteeing optimal suction performances of the equipment 10. Actually, each time the concentration of particulate material detected do not reveal the need for performing an additional filtering, the additional filter stage 19 is by-passed by means of a suitable control of the opening and closure of the pair of valves 17,18.

The control of the mobile equipment 10 according to the present invention preferably further provides for stopping the suction pump 14 should the concentration of residual particulate material detected at the outlet thereof 14 be higher than a second preset limit value. This allows preventing damaging the pump 14.

Should the monitoring group 15 additionally comprise a thermal probe and/or a probe for the detection of the electrostatic charge, there occurs a cyclic control of the outlet of the suction pump 14 also in terms of temperature and/or electrostatic charge.

The temperature values and/or instantaneous electrostatic charge are transmitted to the processing means along with the relative concentrations of instantaneous particulate material.

If the combination of the temperature values and/or electrostatic charge and concentration of the particulate material detected by the monitoring group 15 of the outlet of the suction pump 14 exceeds alarm values indicating the attainment of a critical situation (explosive environment), the processing means 16 control the stop of the pump 14 thus preventing the triggering an explosion.

Should the mobile equipment 10 also comprise the second monitoring group 21, this measures the concentration and possibly also the electrostatic charge associated to the particulate material at the outlet of the additional filter stage 19 transmitting the values detected at the processing means 16.

The processing means 16 are capable of providing a report in chart and/or numerical form regarding a preset time range, displaying the trend of the monitored values, i.e. the concentration, the temperature and the electrostatic charge associated to the particulate material at the outlet of the suction pump 14, as well as, when activated, also the concentration and the electrostatic charge associated to the particulate material at the outlet of the additional filter stage 19.

The characteristics and advantages of the equipment subject of the present invention are clear from the outlined description.

In fact, thanks to the presence of an additional filter stage which can be activated in a controlled manner, the mobile equipment for suctioning and filtering particulate material according to the present invention can perform a reduction of the concentration of residual particulate material present at the outlet of the suction pump when there actually arises the need, maintaining the suction performances of the equipment at optimal values in all other cases.

Furthermore, the group for monitoring the outlet of the pump together with the processing means allow preventing damaging situations for the equipment such as damaging the suctioning pump due to an excessive concentration of particles in the suctioned air or creation of an explosive environment within the filter stages.

Lastly, it is clear that the mobile equipment for suctioning and filtering particulate material as conceived is susceptible to numerous modifications and variants, all falling within the scope of the invention; furthermore all details are replaced by technically equivalent elements. In practice the used materials, as well as the dimensions, may vary depending on the technical requirements.

## Claims

1. A mobile equipment (10) for suctioning and filtering particulate material from a flow to be treated comprising air and non-volatile particulate material, the equipment comprising at least one first filter stage (12) having an inlet (12a) for the introduction of said flow to be treated, at least one first outlet (12b) for conveying downstream of said treated flow towards at least one suction pump (14) and at least one second outlet (12c) for the recovery of said particulate material, and at least one second filter stage (13) arranged in cascade with respect to said at least one first filter stage (12), said second filter stage (13) having an inlet (13a) for the introduction of said flow to be treated and at least one first outlet (13b) for conveying said treated flow downstream towards said at least one suction pump (14), said first outlet (12b) of said first filter stage (12) being connected to said inlet (13a) of said second filter stage (13) **characterised in that** downstream of said at least one suction pump (14) there is provided a first group (15) for monitoring the residual particulate material exiting from said at least one suction pump (14), said first monitoring group (15) being connected to processing means (16) for controlling - opening and closing - a pair of valves (17,18) for selectively directing a flow exiting from said at least one suction pump (14) towards an additional filter stage (19) arranged downstream of said first monitoring group (15), or directly towards an outlet for release into the open air.

2. A mobile equipment (10) for suctioning and filtering particulate material according to claim 1 **characterised in that** said first monitoring group (15) comprises at least one triboelectric probe for determining the concentration of particulate material exiting from said at least one suction pump (14).

3. A mobile equipment (10) for suctioning and filtering particulate material according to claim 1 or 2 **characterised in that** said first monitoring group (15) comprises at least one thermal probe adapted to detect the temperature of said flow exiting from said suction pump (14) and/or at least one probe for the detection of the electrostatic charge of said flow exiting from said suction pump (14).

4. A mobile equipment (10) for suctioning and filtering particulate material according to any one of the preceding claims **characterised in that** it comprises a second monitoring group (21) arranged downstream of said additional filter stage (19) for determining the concentration of particulate material downstream of said additional filter stage (19).

5. A mobile equipment (10) for suctioning and filtering particulate material according to any one of the preceding claims **characterised in that** said second outlet (12c) for recovering the particulate material of said at least one first filter stage (12) is connected to a containment tank (11).

6. A mobile equipment (10) for suctioning and filtering particulate material according to any one of the preceding claims **characterised in that** it comprises a silencer filter (20) arranged downstream of said suction pump (14) and upstream of said first monitoring group (15).

7. A mobile equipment (10) for suctioning and filtering particulate material according to any one of the preceding claims **characterised in that** a first filter stage (12) is comprised in a first housing (31) comprising a lower funnel-shaped portion and a second filter stage (13) is comprised in a second housing (32).

8. A mobile equipment (10) for suctioning and filtering particulate material according to claim 7 **characterised in that** in said first housing (31) there is comprised a second thermal probe (22) and/or at least one probe for the detection of the electrostatic charge.

9. A mobile equipment (10) for suctioning and filtering particulate material according to claim 7 or 8 **characterised in that** said second housing (32) is closed and/or soundproofed.

10. A mobile equipment (10) for suctioning and filtering particulate material according to any one of claims 7 to 9 **characterised in that** said first monitoring group (15), said pair of valves (17,18) and said additional filter stage (19) are comprised in said second housing (32).

11. A mobile equipment (10) for suctioning and filtering particulate material according to any one of the preceding claims **characterised in that** it is obtained in a combined configuration and integrated with an equipment for the treatment of liquid materials.

12. An industrial vehicle (30) comprising a tractor (33) connected to a chassis provided with a plurality of motorised wheels (34) **characterised in that** a mobile equipment (10) for suctioning and filtering particulate material according to any one of the preceding claims is coupled to said chassis.

13. A method for controlling the mobile equipment (10) for suctioning and filtering particulate material according to any one of claims 1 to 11 comprising the following steps:
- cyclically monitoring the outlet of said suction pump (14), through said first monitoring group (15), detecting the concentration of the emitted residual non-volatile particulate material;
- transmitting the instantaneous concentrations of residual particulate material detected to said processing means (16);
- if the concentration of residual particulate material detected at the outlet of said suction pump (14) is higher than a first limit value, controlling the closure of a first valve (17) of said pair of valves (17,18) arranged along a releasing branch into the open air and the opening of a second valve (18) of said pair of valves (17,18) arranged along a branch directed towards said additional filter stage (19);
- if the concentration of residual particulate material detected at the outlet of said suction pump (14) is lower than said first limit value, controlling the opening of said first valve (17) and the closure of said second valve (18).

14. A method for controlling a mobile equipment (10) for suctioning and filtering particulate material according to claim 13 **characterised in that** it comprises the step consisting in stopping said suction pump (14) if the concentration of residual particulate material detected at the outlet of said suction pump (14) is higher than a second limit value.

15. A method for controlling a mobile equipment (10) for suctioning and filtering particulate material according to claim 13 or 14 **characterised in that** said step for monitoring the outlet of said suction pump (14) consists in additionally cyclically detecting also the temperature and/or the electrostatic charge of said flow in outlet.

16. A method for controlling a mobile equipment (10) for suctioning and filtering particulate material according to claim 15 **characterised in that** it comprises the step consisting in stopping said suction pump (14) if the temperature and/or the electrostatic charge and the concentration of residual particulate material detected at the outlet of said suction pump (14) are higher than alarm values.

17. A method for controlling a mobile equipment (10) for suctioning and filtering particulate material according to any one of claims 13 to 16 **characterised in that** it comprises the step consisting in detecting the concentration of particulate material at the outlet of said additional filter stage (19).
